# EUROPÄISCHE PATENTSCHRIFT

(11) **EP 0 798 241 B1**
(45) Veröffentlichungstag und Bekanntmachung des Hinweises auf die Patenterteilung: **03.12.2003**
(21) Anmeldenummer: 97105066.1
(22) Anmeldetag: 26.03.1997
(51) Int. Cl.: B65G 43/02, G06K 19/077

(54) **Fördergurt mit eingebetteten Transpondern**
Conveyer belt provided with embedded transponders
Courroie du convoyeur pourvue de transpondeurs encastrés

(30) Priorität: 29.03.1996 DE 19612521
(43) Veröffentlichungstag der Anmeldung: 01.10.1997
(73) Patentinhaber: ContiTech Transportbandsysteme GmbH, 30165 Hannover (DE)
(72) Erfinder: Alles, Rainer, Dr., 30916 Isernhagen (DE); Schulze, Siegfried, 47495 Rheinberg (DE); Scheuermann, Frank, 45739 Oer-Erkenschwick (DE)

(56) Entgegenhaltungen:
- DE-A- 2 404 769
- DE-U- 29 516 467
- US-A- 4 621 727

## Beschreibung

Die Erfindung betrifft einen Fördergurt mit in Abständen zueinander in die Deckschicht und/oder Karkasse eingelegten elektrischen Transpondern, bestehend aus einem integrierten Schaltkreis und einer leitend mit dem integrierten Schaltkreis verbundenen Spule, die von einer außerhalb des Fördergurtes ortsfest angebrachten Sende-/Empfangseinrichtung über induktive Kopplung mit Energie versorgt werden und mit dieser Sende-/Empfangseinrichtung Daten austauschen. Die Erfindung betrifft ferner ein Verfahren zur Herstellung eines Fördergurtes mit in Abständen zueinander in die Deckschicht und/oder Karkasse eingelegten elektrischen Transpondern, bestehend aus einem integrierten Schaltkreis und einer leitend mit dem integrierten Schaltkreis verbundenen Spule. Aus dem Dokument DE-U-29 516 467 sind ein solcher Färdergurt und Verfahren zu dessen Herstellung bekannt.

Gurtförderanlagen mit umlaufenden Fördergurten, die Hunderte von Metern lang sein können, stellen einen beträchtlichen Wert dar. Um überraschende größere Ausfälle zu vermeiden, gilt es, eine zuverlässige Überwachung sicherzustellen. In diesem Zusammenhang ist bereits vorgeschlagen worden, in die Deckschicht und/oder Karkasse eines endlosen Fördergurtes elektrische Transponder zur Früherkennung von Längsrissen im Fördergurt bzw. eines übermäßigen Verschleißes der Fördergurtdeckplatte einzulegen.

So wird beispielsweise in der noch nicht veröffentlichten Patentanmeldung mit dem deutschen Aktenzeichen 195 253 26.4 der Anmelderin vorgeschlagen, Transponder in die Deckschicht und/oder Karkasse eines Fördergurtes einzulegen, mit denen der Verschleiß von Fördergurtdeckschichten detektiert werden kann. Die Transponder sind derart angeordnet, daß sie bei Eintreten eines bestimmten Verschleißbetrages der Fördergurtdeckschicht bzw. Karkasse zerstört werden oder herausfallen, was zu einem Signalausfall des entsprechenden Transponders führt, der von einer ortsfesten Sende-/Empfangseinrichtung registriert und für Steuerungszwecke des Fördergurtes ausgewertet wird.

Die Ausführungen zeigen, daß eine Schädigung des Fördergurtes durch die Transponder nur dann zuverlässig angezeigt wird, wenn ein Funktionsausfall der Transponder einzig und allein auf die Schädigung des Fördergurtes zurückzuführen ist. Es ist jedoch bekannt, daß Fördergurte im Alltagsgebrauch extrem hohen mechanischen Belastungen ausgesetzt sind, die nicht unmittelbar zu einer Schädigung des Fördergurtes führen. Die in den Fördergurt eingelegten Transponder sollten durch diese üblichen mechanischen Belastungen nicht zerstört werden, da ansonsten ein Signalausfall der Transponder herbeigeführt wird, obwohl die Deckschicht bzw. die Karkasse an der durch den ausgefallenen Transponder vorgegebenen Stelle noch nicht den entsprechenden Verschleiß aufweist.

Darüber hinaus sollte ein Fördergurt mit in die Deckschicht und/oder Karkasse eingelegten elektrischen Transpondern möglichst einfach in der Herstellung sein, damit die durch den Einbau der Transponder entstehenden Mehrkosten nicht in einem ungünstigen Verhältnis zu dem dadurch erreichten Nutzen stehen. Der bisher unveröffentlichten Anmeldung der Anmelderin mit dem deutschen Aktenzeichen 195 253 26.4 ist nicht zu entnehmen, wie die Transponder einerseits vor den hohen mechanischen Belastungen im Alltagsgebrauch geschützt und andererseits auf möglichst einfache und preiswerte Art und Weise in den Fördergurt eingebracht werden können.

Der Erfindung liegt die Aufgabe zugrunde, einen Fördergurt mit in Abständen zueinander in die Deckschicht und/oder Karkasse eingelegten Transpondern zu schaffen, der einfach und preiswert in der Herstellung ist und dessen Transponder gut vor den hohen mechanischen Belastungen im alltäglichen Gebrauch geschützt sind und die den Verschleiß der Fördergurtdeckschicht bzw. Karkasse, bzw. Längsrisse etc., zuverlässig anzeigen.

Die Aufgabe wird gemäß dem kennzeichnenden Merkmal des Anspruchs 1 dadurch gelöst, daß jeder Transponder in einen hitzebeständigen, der Vulkanisationstemperatur von ca. 130°-180° und den Vulkanisationsbelastungen standhalteden Körper eingebettet ist, dessen Längsausdehnung und dessen Breitenausdehnung um ein vielfaches größer ist als dessen Höhenausdehnung.

Die Aufgabe wird gemäß dem kennzeichnenden Merkmal des nebengeordneten Verfahrensanspruchs 5 ferner dadurch gelöst, daß
- jeder Transponder in einen hitzebeständigen, der Vulkanisationstemperatur von ca. 130°-180° und den Vulkanisationsbelastungen standhalteden Körper eingebettet wird, dessen Längsausdehnung und dessen Breitenausdehnung seine Höhenausdehnung um ein vielfaches überschreitet
- die in den hitzebeständigen Körpern eingebetteten Transponder bei der Vulkanisation des Fördergurtes in den Fördergurt derartig eingebracht werden, daß die Längsausdehnung der Körper im wesentlichen in Längsrichtung des Fördergurtes liegt.

Die Erfindung geht von der grundlegenden Erkenntnis aus, daß Fördergurte mit in die Deckschicht und/oder Karkasse eingelegten elektrischen Transpondern dann besonders einfach und preiswert in der Herstellung sind, wenn die Transponder bereits bei der Vulkanisation der Fördergurte in diese eingebracht werden. Dazu werden die Transponder in hitzebeständige, der Vulkanisationstemperatur von ca. 130° - 180° und den Vulkanisationsbelastungen (Drücke von ca. 350 N/cm² und Schubverformungen durch Fließen des Gummis etc.) standhaltende Körper eingebettet. Es hat sich gezeigt, daß Körper, die die genannten Randbedingungen erfüllen, nur aus "starren" Materialien ausgebildet werden können. Gemäß dem Grundgedanken der Erfindung werden die separaten Körper aus diesem Grunde so dimensioniert, daß ihre Längen- und Breitenausdehnung um ein vielfaches größer ist als ihre Höhenausdehnung, damit die Körper eine Flexibilität und damit eine Belastbarkeit gegenüber mechanischen Biegebeanspruchungen im alltäglichen Gebrauch des Fördergurtes aufweisen und somit die eingebettenen Transponder vor mechanischen Belastungen schützen.

Die Vorteile der Erfindung sind insbesondere darin zu sehen, daß die Fördergurte wie an sich üblich hergestellt und die Transponder dennoch in sie eingebettet werden können. Darüber hinaus sind die Transponder durch die Körper vor hohen Zugkräften, die in dem Fördergurt auftreten, gut geschützt. Gleichzeitig können die Transponder den Biegebeanspruchungen, die beim Lauf des Fördergurtes über Trägerrollen etc. auftreten, nachgeben. Dadurch ist einem unerwünschten "Herausarbeiten" der einzelnen Transponder aus dem Fördergurt vorgebeugt. Ein weiterer Vorteil der Erfindung ist darin zu sehen, daß die Transponder bei gutem Schutz vor mechanischen Belastungen den Verschleiß der Fördergurtdeckschicht bzw. der Karkasse, bzw. Längsrisse etc., genau anzeigen, da die Transponder lediglich durch einen flachen Körper geschützt sind, der bereits bei geringer Schädigung des Fördergurtes auch beschädigt wird. Somit kommt es zu dem gewünschten Signalausfall des Transponders. Ebenfalls kann der flache Körper aus der abgenutzten Fördergurtdeckschicht bzw. Karkasse herausfallen, was auch zu einem Signalausfall führt.

Gemäß einem Ausführungsbeispiel der Erfindung nach Anspruch 2 enthält der Körper, in dem ein Transponder eingebettet ist, ein Fenster, das mit dem Material der Fördergurtdeckschicht bzw. der Karkasse durchsetzt ist. Hierdurch wird der Vorteil erreicht, daß der Körper mit dem eingebettenen Transponder in der Fördergurtdeckschicht und/oder Karkasse "verankert" wird. Darüber hinaus wird durch das Fenster die Flexibilität und somit die mechanische Belastbarkeit des Körpers nochmals deutlich erhöht.

Gemäß einem Ausführungsbeispiel der Erfindung nach Anspruch 3 besteht der Körper aus einem Kohlefaserlaminat. Dieses Material hat den Vorteil, daß es besonders hitzebeständig ist und somit auch Temperaturspitzen bei der Herstellung des Fördergurtes standhalten kann.

Gemäß einer vorteilhaften Ausgestaltung der Erfindung nach Anspruch 4 liegt das Verhältnis der Längsausdehnung bzw. Breitenausdehnung des Körpers zur Höhenausdehnung des Körpers im Bereich von ca. 5 bis 150.

Zusammenfassend ist festzustellen, daß durch die erfindungsgemäße Einbettung der Transponder in hitzebeständige Körper, deren Längsausdehnung bzw. Breitenausdehnung ihre Höhenausdehnung um ein vielfaches übersteigt, eine besonders einfache Herstellung von Fördergurten mit eingelegten Transpondern möglich ist und eine Schädigung des Fördergurtes durch die Transponder zuverlässig angezeigt wird.

Ausführungsbeispiele und weitere Vorteile der Erfindung werden im Zusammenhang mit den nachstehenden Figuren erläutert, darin zeigt:
- Fig. 1: eine Gurtförderanlage,
- Fig.2: ein Fördergurt im Längsschnitt
- Fig.3a: einen Körper mit eingebettetem Transponder in Aufsicht,
- Fig.3b: einen Körper mit eingebettetem Transponder im Schnitt.

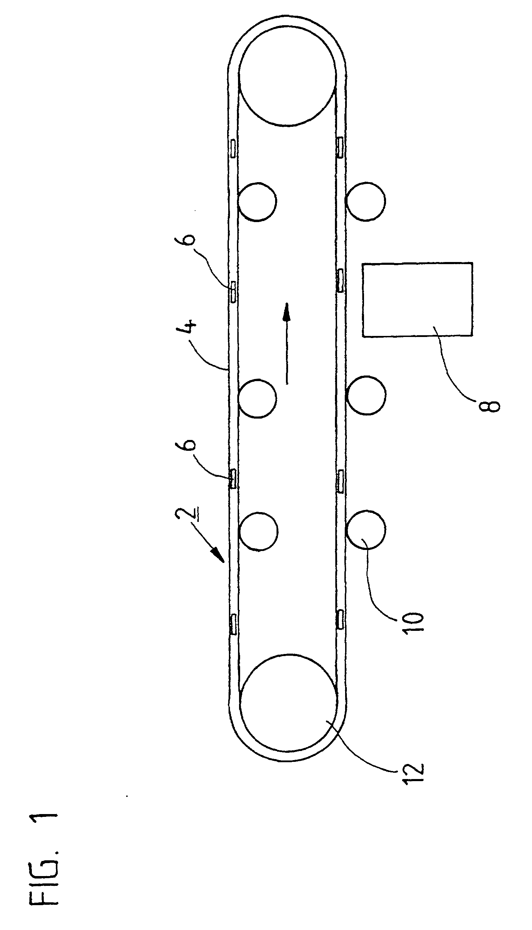

Fig. 1 zeigt schematisch eine Gurtförderanlage 2, die einen Fördergurt 4 aufweist, der über die Trägerrollen 10 und Trommeln 12 endlos umläuft. In dem Fördergurt 4 sind in Abständen zueinander Transponder 6 eingelegt, mit deren Hilfe der Verschleiß des Fördergurtes 4 oder Längsrisse im Fördergurt detektiert werden. Dazu senden die Transponder 6 an die außerhalb des Fördergurtes angebrachte Sende- und Empfangseinrichtung 8 ein individuelles Signal aus, wenn sie an dieser vorüberlaufen. Die Sende- und Empfangseinrichtung 8 schließt aus dem Empfang des individuellen Signals, das der entsprechende Transponder 6 funktionstüchtig ist.

Bleibt das individuelle Signal eines Transponders hingegen aus, so wird von der Sende- und Empfangseinrichtung 8 der Schluß gezogen, daß der Transponder 6, bedingt durch eine Schädigung des Fördergurtes, ausgefallen ist. In diesem Fall werden von der Sende- und Empfangseinrichtung 8 entsprechende Maßnahmen eingeleitet. Die Ausführungen zeigen, daß eine Schädigung des Fördergurtes 4 durch die Transponder 6 nur dann zuverlässig angezeigt werden kann, wenn ein Funktionsausfall der Transponder 6 einzig und allein auf die Schädigung des Fördergurtes 4 zurückzuführen ist.

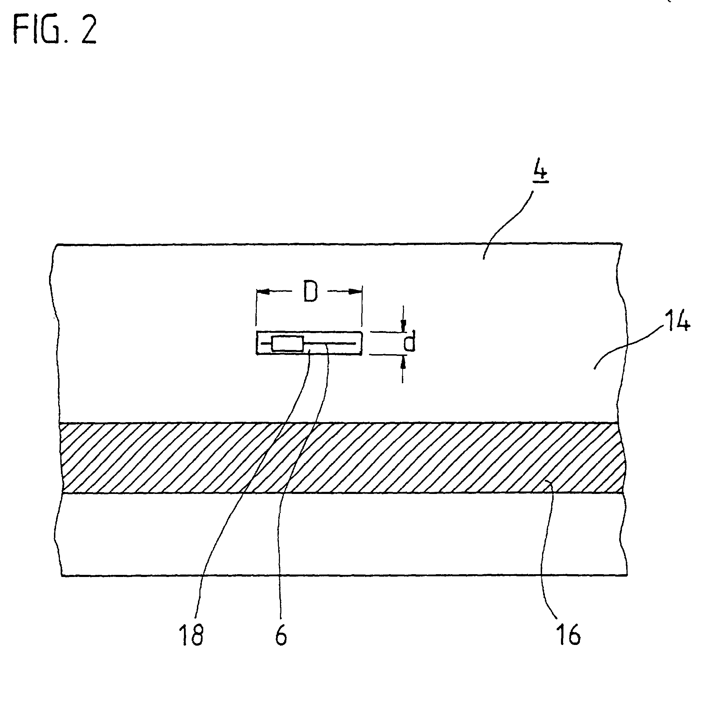

Fig. 2 zeigt einen Abschnitt aus einem Fördergurt 4 im Längsschnitt. Der Fördergurt 4 enthält in Abständen zueinander in die tragseitige Fördergurtdeckschicht 14 und/oder die Karkasse 16 eingelegte Transponder 6, die in einem hitzebeständigen Körper 18 angeordnet sind und deren Längsausdehnung D in Längsrichtung des Fördergurtes 4 orientiert ist. Die in der Fördergurtebene liegende Längsausdehnung D der hitzebeständigen Körper 18 ist wesentlich größer als die senkrecht zur Fördergurtebene liegende Höhenausdehnung d des Körpers 18. Durch diese Dimensionierung des Körpers 18 sind die eingebetteten Transponder 6 gut vor den täglichen mechanischen Belastungen geschützt. Aufgrund der besonderen Ausrichtung der Körper 18 in dem Fördergurt 4 ist darüber hinaus gewährleistet, daß mechanische Biegebeanspruchungen, die beim Lauf des Fördergurtes 4 über Trägerrollen 10 (s. Fig. 1) etc. auftreten, besonders gut kompensiert werden können und sich die Körper 18 nicht aus dem Fördergurt 4 herausarbeiten. Andererseits führt eine Abnutzung der Oberfläche des Fördergurtes 4 bis zu dem Körper 18 zuverlässig zu einer Zerstörung des Körpers 18 bzw. zu seinem Herausfallen aus dem Gurt 4, was zu einem Funktionsausfall des Transponders 6 und damit zu einer zuverlässigen Verschleißanzeige des Fördergurtes 4 führt. Der hitzebeständige Körper 18 kann beispielsweise aus einem Kohlenstofffaserlaminat bestehen. Derartige Laminate sind hitzebeständig bis ca. 3000° C und weisen eine hohe Festigkeit und Steifigkeit auf. Alternativ kann der hitzebeständige Körper 18 auch aus einem Verbandwerkstoff mit Glasfasern oder Aramidfasern oder aus einem Polyesterharz oder Polyurethan bestehen.

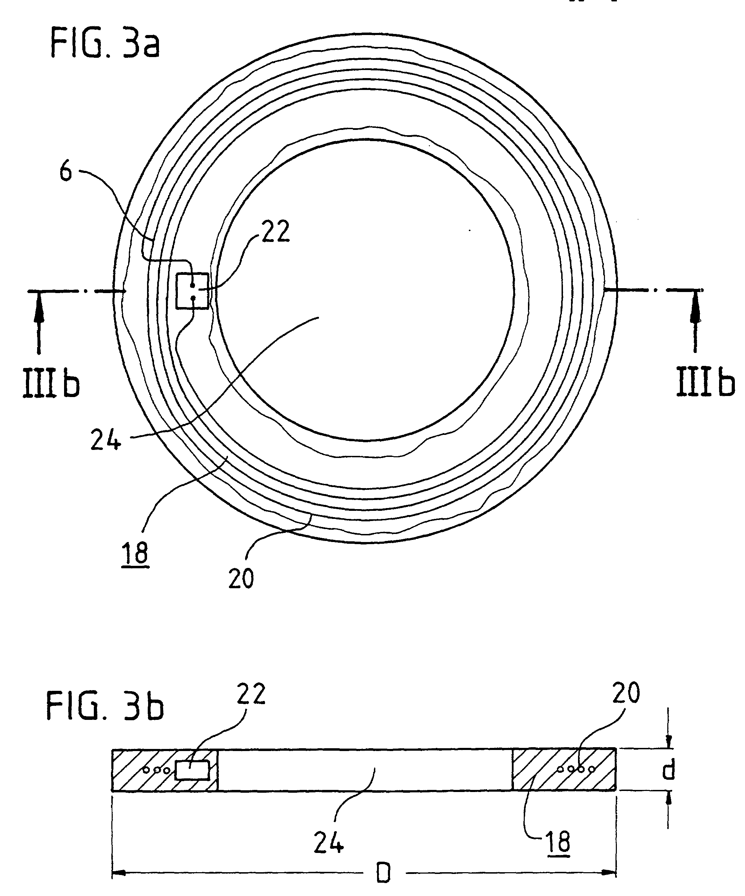

Fig. 3a zeigt einen hitzebeständigen, kreisförmig ausgebildeten Körper 18 in Aufsicht. In dem hitzebeständigen Körper 18 ist ein Transponder 6, bestehend aus einem integrierten Schaltkreis 22, der leitend mit einer Spule 20 verbunden ist, eingebettet. Der hitzebeständige Körper 18 enthält ein Fenster 24, durch das die Flexibilität des Körpers 18 gegenüber mechanischen Biegebeanspruchungen erhöht wird. Darüber hinaus kann durch das Fenster 24 beim Einbetten des Körpers 18 in den Fördergurt 4 Material aus der Deckschicht und/oder Karkasse dringen, so daß der hitzebeständige Körper 18 in dem Fördergurt "verankert" wird.

Fig. 3b zeigt einen Schnitt entlang der in der Fig. 3a gezeigten Linie. Die Längenausdehnung bzw. Breitenausdehnung D des Körpers 18 ist wesentlich größer als die Höhenausdehnung d des Körpers 18 und das Verhältnis Längsausdehnung/Höhenausdehnung bzw. Breitenausdehnung/-Höhenausdehnung liegt in einem Bereich von ca. 5 - 150. Der Körper 18 wird derartig in den Fördergurt 4 eingebracht, daß die Längenausdehnung bzw. Breitenausdehnung D in Längsrichtung des Fördergurtes 4 liegt, so wie es auch in Fig. 2 angedeutet ist.

### Bezugszeichenliste

- 2: Gurtförderanlage
- 4: Fördergurt
- 6: Tansponder
- 8: ortsfest angebrachte Sende-/Empfangsstation
- 10: Trägerrollen
- 12: Trommeln
- 14: Fördergurtdeckschicht
- 16: Karkasse
- 18: Körper, in dem Transponder angeordnet ist
- 20: Spule
- 22: integrierter Schaltkreis
- 24: Fenster

## Patentansprüche

1. Fördergurt (4) mit in Abständen zueinander in die Deckschicht (14) und/oder Karkasse (16) eingelegten elektrischen Transpondern (6), bestehend aus einem integrierten Schaltkreis (22) und einer leitend mit dem Schaltkreis (22) verbundenen Spule (20), die von einer außerhalb des Fördergurtes (4) ortsfest angebrachten Sende-/Empfangseinrichtung (8) über induktive Kopplung mit Energie versorgt werden und mit dieser Sende/Empfangseinrichtung (8) Daten austauschen,
**dadurch gekennzeichnet,**
**daß** jeder Transponder (6) in einen hitzebeständigen, der Vulkanisationstemperatur von ca. 130° - 180° und den Vulkanisationsbelastungen standhaltenden Körper (18) eingebettet ist, dessen Längsausdehnung und Breitenausdehnung um ein Vielfaches größer ist als dessen Höhenausdehnung.

2. Fördergurt (4) nach Anspruch 1, **dadurch gekennzeichnet, daß** der Körper (18) ein Fenster (24) enthält, das mit Material der Fördergurtdeckschicht (14) und/oder der Karkasse (16) durchsetzt ist.

3. Fördergurt (4) nach einem der Ansprüche 1 bis 2, **dadurch gekennzeichnet, daß** der Körper (18) aus einem Kohlenstoffaserlaminat oder aus einem Verbundwerkstoff mit Glasfasern oder Aramidfasern oder aus einem Polyesterharz oder Polyurethan besteht.

4. Fördergurt (4) nach einem der Ansprüche 1 bis 3, **dadurch gekennzeichnet, daß** das Verhältnis der Längsausdehnung und Breitenausdehnung des Körpers (18) zur Höhenausdehnung des Körpers (18) in einem Bereich von ca. 5 bis 150 liegt.

5. Verfahren zur Herstellung eines Fördergurtes (4) mit in Abständen zueinander in die Deckschicht (14) und/oder Karkasse (16) eingelegten elektrischen Transpondern (6), bestehend aus einem integrierten Schaltkreis (22) und einer leitend mit dem integrierten Schaltkreis (22) verbundenen Spule (20), **dadurch gekennzeichnet, daß**
- jeder Transponder (6) in einen hitzebeständigen, der Vulkanisationstemperatur von ca. 130° - 180° und den Vulkanisationsbelastungen standhaltenden Körper (18) eingebettet wird, dessen Längsausdehung und Breitenausdehnung seine Höhenausdehnung um ein Vielfaches überschreitet
- die in den hitzebeständigen Körpern (18) eingebetteten Transponder (6) bei der Vulkanisation des Fördergurtes (4) in den Fördergurt (4) derartig eingebracht werden, daß die Längsausdehnung der Körper (18) im wesentlichen in Längsrichtung des Fördergurtes (4) liegt.

## Claims

1. Conveyor belt (4), having electrical transponders (6) which are spaced apart from one another and are inserted in the cover layer (14) and/or carcase (16), said belt comprising an integrated circuit (22) and a coil (20), which is conductively connected to the circuit (22), said circuit and coil being supplied with energy by a transmitting/receiving means (8), which is mounted in a stationary manner externally of the conveyor belt (4), via an inductive coupling and exchanging data with this transceiver (8), **characterised in that** each transponder (6) is embedded in a heat-resistant body (18), which withstands the vulcanisation temperature of approx. 130° - 180° and the vulcanisation loads, the longitudinal extent and width extent of said body being greater by a multiple than the vertical extent thereof.

2. Conveyor belt (4) according to claim 1, **characterised in that** the body (18) includes a window (24), which is traversed by material of the conveyor belt cover layer (14) and/or of the carcase (16).

3. Conveyor belt (4) according to one of claims 1 to 2, **characterised in that** the body (18) is formed from a carbon fibre laminate or from a composite material having glass fibres or aramide fibres or from a polyester resin or polyurethane.

4. Conveyor belt (4) according to one of claims 1 to 3, **characterised in that** the ratio of the longitudinal extent and width extent of the body (18) to the vertical extent of the body (18) lies in a range of approx. 5 to 150.

5. Method of producing a conveyor belt (4) having electrical transponders (6) which are spaced apart from one another and are inserted in the cover layer (14) and/or carcase (16), said belt comprising an integrated circuit (22) and a coil (20), which is conductively connected to the integrated circuit (22), **characterised in that**
- each transponder (6) is embedded in a heat-resistant body (18), which withstands the vulcanisation temperature of approx. 130° - 180° and the vulcanisation loads, the longitudinal extent and width extent of said body exceeding its vertical extent by a multiple, and
- the transponders (6), which are embedded in the heat-resistant bodies (18), are introduced into the conveyor belt (4), during the vulcanisation of the conveyor belt (4), in such a manner that the longitudinal extent of the bodies (18) lies substantially in the longitudinal direction of the conveyor belt (4).

## Revendications

1. Courroie de convoyeur (4), comportant des transpondeurs électriques (6) introduits à distance les uns des autres dans la couche de couverture (14) et/ou la carcasse (16), les transpondeurs (6) étant formés d'un circuit intégré (22) et d'une bobine (20) reliée de façon conductrice au circuit (22), alimentés en énergie par couplage inductif depuis un dispositif émetteur/récepteur (8) monté de façon localement fixe à l'extérieur de la courroie de convoyeur (4) et qui échangent des données avec ce dispositif émetteur/récepteur (8), **caractérisé en ce que** chaque transpondeur (6) est incorporé dans un corps (18) résistant à la chaleur, résistant à la température de vulcanisation, qui est d'environ 130° à 180°, et résistant aux sollicitations se produisant lors de la vulcanisation, corps dont la longueur et la largeur sont des multiples de la hauteur.

2. Courroie de convoyeur (4) selon la revendication 1, **caractérisée en ce que** le corps (18) contient une fenêtre (24) traversée par le matériau de la couche de couverture de courroie de convoyeur (14) et/ou de la carcasse (16) .

3. Courroie de convoyeur (4) selon l'une des revendications 1 à 2, **caractérisée en ce que** le corps (18) est formé d'un laminé de fibres de carbone, ou d'un matériau composite, comportant des fibres de verre ou des fibres d'aramide, ou d'une résine de polyester, ou de polyuréthane.

4. Courroie de convoyeur (4) selon l'une des revendications 1 à 3, **caractérisée en ce que** le rapport entre la longueur et la largeur du corps (18) par rapport à la hauteur du corps (18) est dans une plage d'environ 5 à 150.

5. Procédé de fabrication d'une courroie de convoyeur (4), comportant des transpondcurs électriques (16) incorporés à distance les uns par rapport aux autres dans la couche de couverture (14) et/ou la carcasse (16), les transpondeurs (6) étant formés d'un circuit intégré (22) et d'une bobine (20) reliée de façon conductrice au circuit intégré (22), **caractérisé en ce que**
- chaque transpondeur (6) est incorporé dans un corps (18) résistant à la chaleur, à la température de vulcanisation, qui est d'environ 130 à 180°, et aux sollicitations subies lors de la vulcanisation, dont la longueur et la largeur dépassent de plusieurs fois sa hauteur
- les transpondeurs (6), incorporés dans les corps (18) résistant à la chaleur, sont introduits dans la courroie de convoyeur (4), lors de la vulcanisation de cette courroie de convoyeur (4), de manière que la longueur des corps (18) soit orientée sensiblement dans la direction longitudinale de la courroie de convoyeur (4).
